# EUROPEAN PATENT APPLICATION

(11) **EP 2 439 706 A1**
(43) Date of publication of application: **11.04.2012**
(21) Application number: 09845403.6
(22) Date of filing: 15.06.2009
(51) Int. Cl.: G07F 19/00, G07F 7/08, G07G 1/12, G06Q 30/00, H04L 9/32, H04B 5/00

(54) **DEVICE, SYSTEM AND TRANSACTION METHOD FOR INTEGRATING PAYMENT FUNCTION AND RECEIPT FUNCTION**

(30) Priority: 03.06.2009 CN 200910085990
(71) Applicant: Potevio Institute Of Technology Co., Ltd., Haidian District Beijing 100-080 (CN)
(72) Inventor: ZHANG, Yuhong, Beijing 100080 (CN); YANG, Muxiang, Beijing 100080 (CN); LIU, Daobin, Beijing 100080 (CN); LIU, Hongwei, Beijing 100080 (CN); WANG, Sijun, Beijing 100080 (CN); LIU, Fuhua, Beijing 100080 (CN); DOU, Yongjin, Beijing 100080 (CN); LI, Lizheng, Beijing 100080 (CN); YAO, Bin, Beijing 100080 (CN); TANG, Qinying, Beijing 100080 (CN)
(74) Representative: Kraenzmer, Martin
(86) International application number: PCT/CN2009/072276
(87) International publication number: WO 2010/139122

(57) **Abstract**

The present invention discloses a device, system and transaction method for integrating payment function and receipt function. The device has an intelligent memory card and an intelligent terminal, the intelligent terminal is connected with the intelligent memory card via a universal memory interface. The intelligent terminal is used for: generating a safe transaction management instruction according to an instruction of a user, and sending the safe transaction management instruction to the intelligent memory card and notifying an execution result of the safe transaction management instruction to the user; interacting with a bank side system via a remote communication network; interacting with the user via a user interface; interacting with another device which is integrated with payment function and receipt function and is within a predetermined range via near field communication mode; processing the transaction instruction from the user, another device or the bank side, generating safe transaction application instruction and sending the safe transaction application instruction to the intelligent memory card; notifying an execution result of the safe transaction application instruction to the user, or sending the execution result of the application instruction to the bank side system or another device. The intelligent memory card is used for executing the safe transaction management instruction and the safe transaction application instruction. The device can be integrated with payment function and receipt function.

## Description

### FIELD OF THE INVENTION

The application relates to the technology of electronic commerce, and particularly to a device integrated with payment function and collection function, a transaction system and a transaction method.

### BACKGROUND OF THE INVENTION

With the maturity and development of mobile communication technique, mobile intelligent terminals are provided with more and more functions. In addition to functions of calling and messaging, functions such as E-mail, web browsing, music playing, movie viewing, photographing, wireless data services, etc. are desirable in the mobile intelligent terminals for users. These functions are convenient for people and satisfy the social requirements of fast tempo and high efficiency, and thus are popular in customers.

At the same time, with the ever-increasing popularity of credit card and integrated circuit (IC) card, more and more payment transactions and query transactions are done on Point of Sale (POS) machines. Compared with cash transactions, non-cash payment systems based on credit cards or IC cards have advantages of security, quick operation, no change, healthy, etc., and thus are used widely in financial, telecommunication and traffic industries.

There are many methods of non-cash payment in the prior art, which can be generally classified into two types: in solutions of the first type, a payer makes payment on a POS machine in a fixed business place by using a portable payment device such as a magnetic card, an IC card and a Radio Frequency (RF) IC card, and the POS machine in this type of solutions is connected with a POS center of a bank via cables; in solutions of the second type of, the payer makes payment with devices same as that in the solutions of the first type, and the payee has three modes for the collection: the POS machine operating in an off-line state, the POS machine operating in an on-line state by connecting with the POS center via a wireless communication channel, and a mobile intelligent terminal being integrated with the function of the POS machine or the RF card reader and operating in an on-line or off-line state.

In solutions of the first type, the POS machine is of no mobility and only used at fixed places, and dedicated equipments are required, which leads to high cost. Therefore, this type of solutions lacks flexibility and is only suitable for deployment in enterprises or institutions.

In solutions of the second type, among the three modes, the first two need dedicated equipments, and have disadvantages of high cost, large volume and hard to carry. In order to use the mobile intelligent terminal and the mobile POS machine at the same time, the user has to carry the two handheld devices, which leads to inconvenience and makes the two modes hard to be popularized.

The third mode overcomes the above disadvantages to a certain extent. For example, a solution of implementing a wireless POS machine by adding an RF module and arranging an antenna on a mobile phone is disclosed in a Chinese patent application No. 200720138948.9; however, this solution requires that the mobile intelligent terminal of the payee, such as a mobile phone, a PDA, or a portable computer, has a card reading unit corresponding to an IC card and is integrated with various secure transaction application modules such as a POS Security Module and a Purchase Secure Access Module (PSAM), which means the hardware of the existing mobile intelligent terminal requires to be modified. Due to the fact that there are a large number of manufacturers and model numbers for mobile intelligent terminals, the cost of modification is high, and the third mode is hard to popularize in actual applications.

In addition, the process of loading funds in the above two types of solutions can only be performed face to face at specified sites, and leads to a bad user experience.

### SUMMARY OF THE INVENTION

In view of this, an object of the present invention is to provide a device integrated with payment function and collection function, a system for payment and collection, and a transaction method, which do not require modifying the hardware of the existing portable terminal device and are easy to be popularized and applied, so that the user can conduct transactions anywhere at anytime.

To achieve the above object, the present invention provides a technical solution as follows:

A device integrated with payment function and collection function, including a smart memory card and an intelligent terminal, where the intelligent terminal is connected with the smart memory card via a universal storage interface;

the intelligent terminal is adapted to generate a secure transaction management instruction according to an instruction from a user, send the secure transaction management instruction to the smart memory card, and notify the user of an execution result of the secure transaction management instruction fed back from the smart memory card; to interact with a bank side system via a remote communication network; to perform information interaction with the user via a user interface; to interact with another device integrated with payment function and collection function within a predetermined range in a near-field communication mode; to process a transaction instruction from the user, the another device or the bank side system, generate and send a corresponding secure transaction application instruction to the smart memory card; and to notify the user of an execution result of the secure transaction application instruction fed back from the smart memory card, or send the execution result of the secure transaction application instruction to the bank side system or the another device; and

the smart memory card is adapted to execute the secure transaction management instruction and the secure transaction application instruction.

The present invention provides another device integrated with payment function and collection function, which includes a smart memory card and an intelligent terminal, where the intelligent terminal is connected with the smart memory card via a universal storage interface,

the intelligent terminal is adapted to send a secure transaction management instruction to the smart memory card according to an instruction of a user, and notify the user of an execution result of the secure transaction management instruction fed back from the smart memory card; to interact with a bank side system via a remote communication network; to perform information interaction with the user via a user interface; to process a transaction instruction from the user or the bank side system, generate and send a corresponding secure transaction application instruction to the smart memory card; and to notify the user of an execution result of the secure transaction application instruction fed back from the smart memory card, or send the execution result of the secure transaction application instruction to the bank side system; and

the smart memory card is adapted to execute the secure transaction management instruction received from the intelligent terminal; to interact with another device integrated with payment function and collection function within a predetermined range in a radio frequency communication mode; to execute the secure transaction application instruction received from the another device or the intelligent terminal, and send the execution result of the secure transaction application instruction to the intelligent terminal or the another device.

The present invention provides a corresponding system for payment and collection based on the above devices, and the system includes a terminal apparatus, a load/unload transaction sub-system, a card issuing sub-system and a bank back-end system, where the terminal apparatus is any one of the above devices integrated with payment function and collection function, the terminal apparatus is arranged at the user side, and the load/unload transaction sub-system, the card issuing sub-system and the bank back-end system are arranged at the bank side,

the terminal apparatus is adapted to implement a payment of an electronic transaction as a payer by interacting with the bank back-end system and another terminal apparatus which serves as a payee; to implement a collection of the electronic transaction as a payee by interacting with the bank back-end system and another terminal apparatus which serves as a payer; and to implement a load or unload transaction by interacting with the load/unload transaction sub-system;

the card issuing sub-system is adapted to personalize the smart memory card of the terminal apparatus;

the bank back-end system is adapted to implement a purchase transaction by interacting respectively with the terminal apparatus serving as the payer and the terminal apparatus serving as the payee; and

the load/unload transaction sub-system is adapted to implement the load or unload transaction of the terminal apparatus by interacting with the terminal apparatus.

The present invention provides a method for load transaction by utilizing the system for payment and collection, and the method includes:

a) establishing a secure data transmission channel between an intelligent terminal and a bank back-end system, after a user loges on the bank back-end system by utilizing the intelligent terminal and the bank back-end system authenticates an identity of the user;

b) triggering the load/unload transaction sub-system to perform a POS-like terminal authentication on the intelligent terminal and returning an authentication result to the intelligent terminal, by the bank back-end system;

c) if the intelligent terminal receives information indicating a successful authentication, automatically entering into a load interface, acquiring load information of the user by using the load interface, and proceeding to step d); if the intelligent terminal does not receive information indicating a successful authentication, prompting an error to the user;

d) sending, by the intelligent terminal, a load service request containing the load information of the user, to the bank back-end system; and

e) performing corresponding load operation on the smart memory card via the intelligent terminal, by the bank back-end system, according to the load service request.

The present invention provides a method for purchase transaction by using the system for payment and collection, and the method includes:

according to a payment request sent from a terminal apparatus as a payer or a transaction request sent from a terminal apparatus as a payee, performing a two-way certificate authentication between the terminal apparatus as the payer and the terminal apparatus as the payee and establishing a secure data channel;

switching the terminal apparatus as the payer to a payment mode, and switching the terminal apparatus as the payee to a collection mode;

conducting the transaction in accordance with corresponding financial transaction specification by the terminal apparatus as the payee and the terminal apparatus as the payer;

exiting from the payment mode after a successful transaction, by the terminal apparatus as the payer; generating a transaction record, signing the transaction record by using a private key in a smart memory card of the terminal apparatus as the payee, saving the signed transaction record in the smart memory card, and then exiting from the collection mode, by the terminal apparatus as the payee;

logging on the bank back-end system and sending the saved signed transaction record to the bank back-end system, by the terminal apparatus as the payee; and

verifying the transaction record received from the terminal apparatus as the payee with a public key, which corresponds to the private key in the smart memory card of the payee, and processing an account of the payee according to the transaction record after the verification is passed, by the bank back-end system.

In a conclusion, in the present invention, by arranging a secure transaction application unit in the smart memory card, the terminal device including the smart memory card and a portable terminal apparatus (i.e. the intelligent terminal ) is provided with the payment function and the collection function without modifying the existing portable terminal apparatus, so that a user can conduct transactions anywhere at anytime, thus facilitating the popularization and application of the present invention.

### BRIEF DESCRIPTION OF THE DRAWINGS

To make the above and other features and advantages more apparent to those skilled in the art, the illustrative embodiments of the present invention will be described in details in the following by referring to the drawings, in which:

Figure 1 is a structural schematic diagram of a first embodiment of a device according to the present invention;

Figure 2 is a structural schematic diagram of a second embodiment of the device according to the present invention;

Figure 3 is another structural schematic diagram of a core control unit 1012 in Figure 2;

Figure 4 is a structural schematic diagram of a system for payment and collection according to the present invention;

Figure 5 is a schematic flow diagram of a first embodiment of a method for load transaction according to the present invention; and

Figure 6 is a schematic flow diagram of a first embodiment of a method for purchase transaction according to the present invention.

### DETAILED DESCRIPTION OF THE INVENTION

The core idea of the present invention is to enable a smart memory card to execute a corresponding secure transaction instruction such as an electronic bankbook operating instruction, a POS security module processing instruction or the like by arranging a secure transaction application unit necessary for an electronic transaction in the smart memory card. In this way, without modifying the existing intelligent terminal such as a mobile phone, a PDA, a portable computer or the like, a terminal device integrated with payment function and collection function can be achieved by combining the intelligent terminal with the smart memory card. A system for payment and collection implemented by using this terminal device is easy to be popularized and applied, and accordingly a transaction method implemented by this system is more flexible, by which both the off-line purchase transaction and the on-line purchase transaction are supported and the load transaction can be implemented in a remote mode other than in a face to face mode at specified sites.

The present invention will be described in more details with reference to the drawings and embodiments, to make the objects, technical solutions and advantages of the present invention clearer.

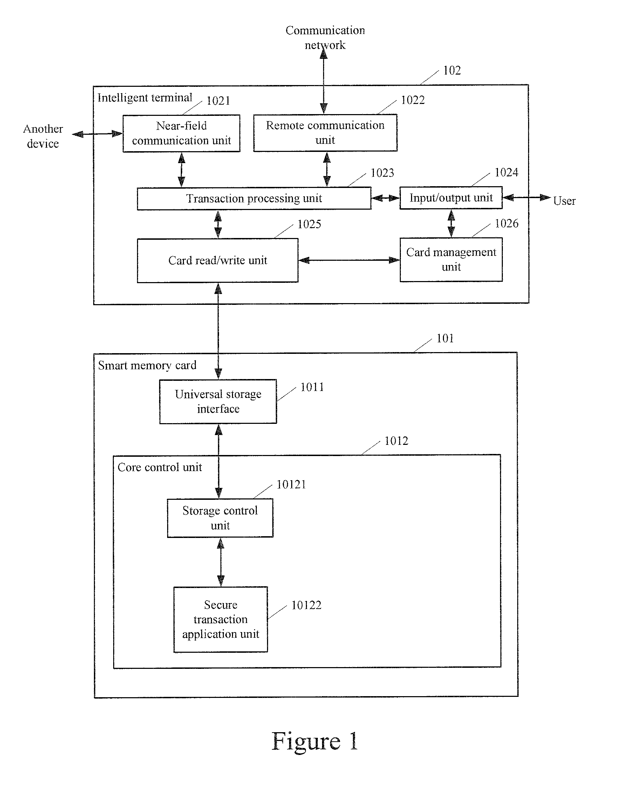

Figure 1 is a structural schematic diagram of a first embodiment of the device integrated with payment function and collection function according to the present invention. As shown in Figure 1, the device according to the first embodiment of the present invention mainly includes a smart memory card 101 and an intelligent terminal 102, where the intelligent terminal 102 performs information interaction with the smart memory card 101 via a universal storage interface 1011.

The intelligent terminal 102 is adapted to generate a secure transaction management instruction according to an instruction from a user, send the secure transaction management instruction to the smart memory card 101, and notify the user of an execution result of the secure transaction management instruction fed back from the smart memory card 101; to interact with a bank side system via a remote communication network; to perform information interaction with the user via a user interface; to interact with another device integrated with payment function and collection function within a predetermined range in a near-field communication mode; to process a transaction instruction from the user, the another device or the bank side, generate and send a corresponding secure transaction application instruction to the smart memory card 101; and to notify the user of an execution result of the secure transaction application instruction fed back from the smart memory card 101, or send the execution result to the bank side system or the another device.

In practical applications, the near-field communication mode may be but not limited to an infrared communication mode or a Bluetooth communication mode. The method for interacting with another device within a predetermined range in the near-field communication mode is well known to those skilled in the art and will not be described in details herein.

The purpose of processing the transaction instruction from the user, another device or the bank side is to generate a corresponding secure transaction application instruction executable by the smart memory card, so as to effectuate a corresponding secure transaction application.

The secure transaction application instruction may be an electronic bankbook operating instruction for effectuating payment or a POS security module processing instruction for effectuating collection. In practical applications, the secure transaction application instruction can be an electronic purse operating instruction or a purchase secure access module (PSAM) processing instruction or other transaction application instructions, as needed for actual applications.

The secure transaction management instruction is an instruction for managing various secure transaction applications, for example, inquiring information related to the secure transaction applications, such as application selecting, balance querying, transaction record querying, PIN code resetting, etc.

How to generate the secure transaction management instruction according to the instruction of the user and how to process the transaction instruction so as to obtain a corresponding secure transaction application instruction can be implemented by those skilled in the art with any method, and will not be described in details herein.

The smart memory card 101 is adapted to execute the secure transaction management instruction and to execute the secure transaction application instruction.

In the embodiment, the smart memory card 101 includes a core control unit 1012 and a universal storage interface 1011, and the universal storage interface 1011 is connected with the core control unit 1012.

The core control unit 1012 is adapted to execute the secure transaction management instruction from the universal storage interface 1011; to execute the secure transaction application instruction received from the universal storage interface 1011; and to send the execution results of the instructions to the intelligent terminal 102 via the universal storage interface 1011.

The universal storage interface 1011 is adapted to implement information interaction between the intelligent terminal 102 and the core control unit 1012.

In practical applications, the universal storage interface 1011 may be, but not limited to, an international standard contact integrated circuit card (IS07816) interface, a multimedia card (MMC) interface, a Secure Digital (SD) memory card interface, a data Compact Flash card (CF) interface, a Smart Multimedia (SM) card interface or a Universal Serial Bus (USB) interface. The specific interface to be used in practice can be determined by those skilled in the art according to the intelligent terminal to be used together.

Specifically, the core control unit 1012 includes a storage control unit 10121 and a secure transaction application unit 10122.

The storage control unit 10121 is adapted to receive the secure transaction management instruction from the universal storage interface 1011 and send the secure transaction management instruction to the secure transaction application unit 10122 for execution; to return an execution result fed back from the secure transaction application unit to the universal storage interface 1011; and to send the secure transaction application instruction received from the universal storage interface 1011 to the secure transaction application unit 10122, and send an execution result of the secure transaction application instruction fed back from the secure transaction application unit 10122 to the intelligent terminal 102 via the universal storage interface 1011.

The secure transaction application unit 10122 is adapted to execute the secure transaction application instruction and the secure transaction management instruction received from the storage control unit 10121, and feed back the execution results to the storage control unit 10121.

In practical applications, the secure transaction application unit 10122 executes the secure transaction application instruction and the secure transaction management instruction received from the storage control unit by means of module(s) for implementing various applications of electronic financial service, which is built in the secure transaction application unit 10122. In practical applications, the specific application module(s) built in the secure transaction application unit 10122 can be selected according to actual needs, i.e. module(s) for implementing various other applications of electronic financial service, such as debit application, credit application, and credit card application, may also be included to implement corresponding applications of electronic financial service. Specifically, how to execute the corresponding secure transaction application instruction and secure transaction management instruction by utilizing the built-in module(s) is well known to those skilled in the art and will not be described in details herein.

It should be noted that in the embodiment, by building the module(s) for implementing applications of electronic financial service into the smart memory card and using the smart memory card to execute various application instructions for electronic transactions, the problem in the prior art that the intelligent terminal requires to be modified in order to have the payment function and collection function is avoided.

In the embodiment, the intelligent terminal 102 includes:

a card management unit 1026, a card read/write unit 1025, an input/output unit 1024, a transaction processing unit 1023, a near-field communication unit 1021 and a remote communication unit 1022.

The card read/write unit 1025 is adapted to implement information interaction between the smart memory card 101 and the card management unit 1026; and to implement information interaction between the smart memory card 101 and the transaction processing unit 1023.

The card management unit 1026 is adapted to generate the secure transaction management instruction according to the instruction of the user; to send the secure transaction management instruction to the smart memory card 101 via the card read/write unit 1025; and to notify the user of the execution result of the secure transaction management instruction fed back from the smart memory card 101, via the input/output unit 1024.

The input/output unit 1024 is adapted to implement information interaction between the transaction processing unit 1023 and the user; and to implement information interaction between the card management unit 1026 and the user.

The remote communication unit 1022 is adapted to implement information interaction between the transaction processing unit 1023 and the bank side system.

The near-field communication unit 1021 is adapted to implement information interaction between the transaction processing unit 1023 and another device within the predetermined range.

The transaction processing unit 1023 is adapted to process the transaction instruction received from the user, the another device integrated with payment function and collection function within the predetermined range or the bank side system, generate and send the corresponding secure transaction application instruction to the smart memory card via the card read/write unit 1025; to notify the user of the execution result of the secure transaction application instruction fed back from the smart memory card 101 via the input/output unit 1024, or send the execution result to the bank side system via the remote communication unit 1022, or feed back the execution result to the another device via the near-field communication unit 1021.

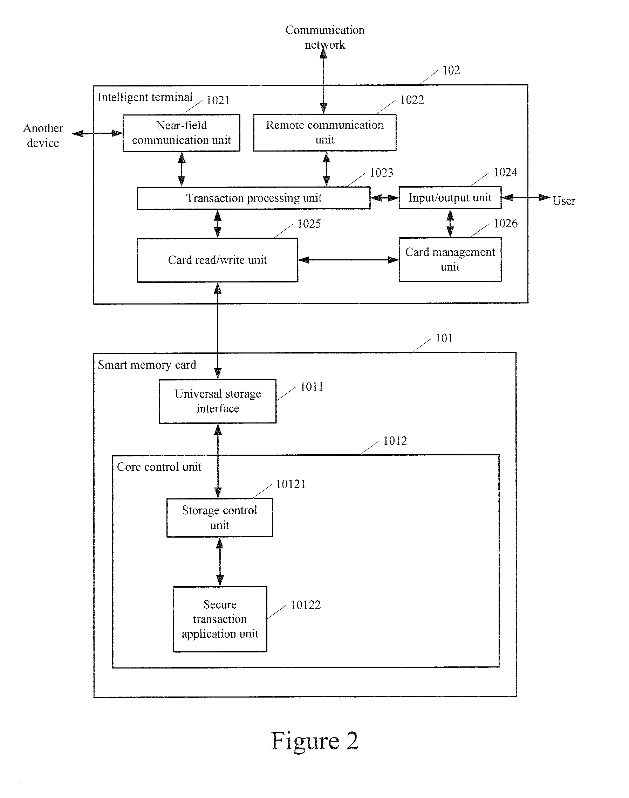

In practical applications, a RF interface and a corresponding RF control unit can be arranged in the smart memory card, so that the device according to the present invention can perform near-field communication with another nearby device in a RF mode via the smart memory card, which will be illustrated hereafter through a second embodiment. Figure 2 is a structural schematic diagram of the second embodiment of the device according to the present invention. As shown in Figure 2, the device of the second embodiment includes a smart memory card 201 and an intelligent terminal 202.

The intelligent terminal 202 is adapted to send a secure transaction management instruction to the smart memory card 201 according to an instruction of a user, and notify the user of an execution result of the secure transaction management instruction fed back from the smart memory card 201; to interact with a bank side system via a remote communication network; to perform information interaction with the user via a user interface; to process the transaction instruction from the user or the bank side system, generate and send a corresponding secure transaction application instruction to the smart memory card 201; and to notify the user of an execution result of the secure transaction application instruction fed back from the smart memory card, or send the execution result to the bank side system.

The smart memory card 201 is adapted to execute the secure transaction management instruction received from the intelligent terminal 202; to interact with another device integrated with payment function and collection function within a predetermined range in a RF communication mode; and to execute the secure transaction application instruction received from the another device or the intelligent terminal 202, and send the execution result to the intelligent terminal 202 or the another device.

The smart memory card 201 includes a RF interface 2013, a core control unit 2012 and a universal storage interface 2011, and the RF interface 2013 and the universal storage interface 2011 are connected with the core control unit 2012.

The core control unit 2012 is adapted to execute the secure transaction management instruction received from the universal storage interface 2011; to execute the secure transaction application instruction received from the RF interface 2013 or the universal storage interface 2011, and send the execution result to the intelligent terminal 202 via the universal storage interface 2011 or send the execution result to the another device via the RF interface 2013.

The universal storage interface 2011 is adapted to implement information interaction between the intelligent terminal 202 and the core control unit 2012;

The RF interface 2013 is adapted to implement information interaction between the core control unit 2012 and the another device within a predetermined range.

Preferably, the RF interface 2013 can implement information interaction between the core control unit 2012 and another device by utilizing ultrahigh frequency, and in this way, it is not required to additionally arrange an extra antenna to the intelligent terminal, which further avoids modification to the existing intelligent terminal. Of course, in practical applications, other frequency bands can be used to implement two-way RF communication.

Specifically, the core control unit 2012 includes: a storage control unit 20121, a secure transaction application unit 20122 and an RF control unit 20123.

The storage control unit 20121 is adapted to send the secure transaction management instruction received from the universal storage interface 2011 to the secure transaction application unit 20122 for execution; to send the secure transaction application instruction received from the universal storage interface 2011 or the RF control unit 2013 to the secure transaction application unit for execution; and to send the execution result fed back from the secure transaction application unit to the RF control unit 20123, or send the execution result to the intelligent terminal 202 via the universal storage interface 2011.

The RF control unit 20123 is adapted to implement information interaction between the storage control unit and the another device in a RF communication mode via the RF interface.

Herein, the information interaction between the storage control unit and the another device in the RF communication mode can be implemented by enabling the smart memory card 201 to switch between the two operating states of a RF tag and a RF reader according to actual needs, i.e. providing the smart memory card 201 both the function of a RF tag and the function of a RF reader. In this way, the RF control unit can works under different sates to perform corresponding RF identification processing on information to be sent or received, so that the smart memory card 201 can interact with the smart memory card in another device integrated with payment function and collection function in a RF communication mode, thereby meeting the communication requirements for the purchase transaction between the payer and the payee during the electronic transaction. The specific method can be implemented in any way by those skilled in art and will not be described in details herein.

The secure transaction application unit 20122 is adapted to execute the secure transaction application instruction and the secure transaction management instruction received from the storage control unit 20121, and feed back execution results of the secure transaction application instruction and the secure transaction management instruction to the storage control unit 20121.

The secure transaction application unit 20122 is the same as the transaction application unit 10122 in the first embodiment of the device described previously and will not be described in details herein.

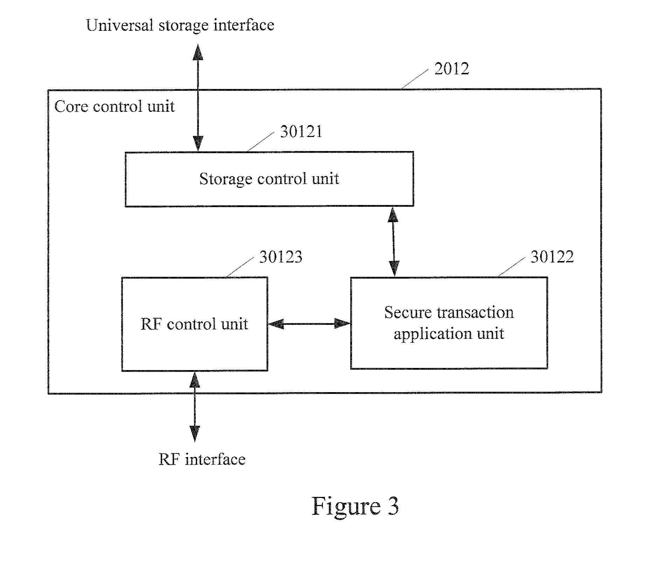

In practical applications, the core control unit 2012 can also be implemented in the form shown in Figure 3, i.e., the RF control unit 20123 is connected directly with the secure transaction application unit 30122. Accordingly, the functions of the respective units will be different from that in the structure described previously. In Figure 3, the specific situations of the storage control unit 30121, the RF control unit 30123 and the secure transaction application unit 30122 are as follows.

The storage control unit 30121 is adapted to send the secure transaction management instruction received from the universal storage interface 2011 to the secure transaction application unit for execution; and to send the execution result fed back from the secure transaction application unit to the intelligent terminal 202 via the universal storage interface 2011.

The RF control unit 30123 is adapted to implement information interaction between the secure transaction application unit 20122 and the another device via the RF interface 2013 in an RF communication mode.

Herein, the RF control unit 30123 implements the information interaction in the same as the RF control unit 20123 described previously, which will not be described in details herein.

The secure transaction application unit 30122 is adapted to execute the secure transaction application instruction received from the storage control unit 30121 or the RF control unit 30123; to execute the secure transaction management instruction received from the storage control unit 30121; and to send execution results of the secure transaction management instruction and the secure transaction application instruction to the storage control unit 30121 or the RF control unit 30123.

Herein, the specific execution of the secure transaction management instruction and the secure transaction application instruction can be implemented in any way by those skilled in the art and will not be described in details herein.

The intelligent terminal in the second embodiment at least includes:

a card management unit 2026, a card read/write unit 2025, an input/output unit 2024, a transaction processing unit 2023 and a remote communication unit 2022.

The card read/write unit 2025 is adapted to implement information interaction between the smart memory card 201 and the card management unit 2026; and to implement information interaction between the smart memory card 201 and the transaction processing unit 2023.

The card management unit 2026 is adapted to generate the secure transaction management instruction according to an instruction of an user; to send the secure transaction management instruction to the smart memory card 201 via the card read/write unit 2025; and to notify the user of an execution result of the secure transaction management instruction fed back from the smart memory card 201 via the input/output unit 2024.

The input/output unit 2024 is adapted to implement information interaction between the transaction processing unit 2023 and the user; and to implement information interaction between the card management unit 2026 and the user.

The remote communication unit 2022 is adapted to implement information interaction between the transaction processing unit 2023 and the bank side system.

The transaction processing unit 2023 is adapted to process the transaction instruction received from the user or the bank side system, generate and send a corresponding secure transaction application instruction to the smart memory card 201 via the card read/write unit 2025; and to notify the user of an execution result of the secure transaction application instruction fed back from the smart memory card 201 via the input/output unit 2024, or send the execution result to the bank side system via the remote communication unit 2022.

The intelligent terminal 202 further includes a near-field communication unit 2021 so that the device of the second embodiment can interact with another device at proximity in a Bluetooth or infrared communication mode, which is present in the existing intelligent terminal. The near-field communication unit 2021 is the same as the near-field communication unit 1021 in the second embodiment of the present invention and will not be described in details herein.

Accordingly, the transaction processing unit 2023 is further adapted to process the transaction instruction received from the another device, generate and send a corresponding secure transaction application instruction to the smart memory card 201 via the card read/write unit 2025; and to feed back the execution result of the secure transaction application instruction, which is fed back from the smart memory card 201, to the another device via the near-field communication unit 2021.

It should be noted that in practical applications, the secure transaction application units 10122, 20122 and 30122 involved in the above devices of the present invention can be implemented by integrated circuit (IC) chips.

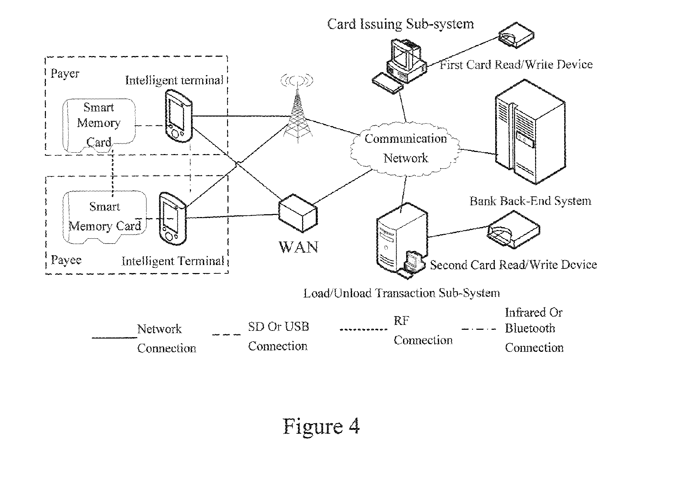

Based on the above device integrated with payment function and collection function, the present invention provides a system for payment and collection. Figure 4 is a structural schematic diagram of the system according to the present invention. As shown in Figure 4, the system includes: a terminal apparatus, a load/unload transaction sub-system, a card issuing sub-system and a bank back-end system, where the terminal apparatus is the device integrated with payment function and collection function according to the present invention, which is arranged at the user side, while the load/unload transaction sub-system, the card issuing sub-system and the bank back-end system are arranged at the bank side, the terminal apparatus at the user side being communicated with the respective systems at the bank side via a remote network.

The terminal apparatus is adapted to implement payment of an electronic transaction as a payer by interacting with the bank back-end system and another terminal apparatus, which serves as a payee; implement collection of the electronic transaction as a payee by interacting with the bank back-end system and another terminal apparatus, which serves as a payer; and to implement a load or unload transaction by interacting with the load/unload transaction sub-system.

The card issuing sub-system is adapted to personalize the smart memory card of the terminal apparatus.

The bank back-end system is adapted to implement a purchase transaction by interacting respectively with the terminal apparatus serving as the payer and the terminal apparatus serving as the payee.

The load/unload transaction sub-system is adapted to implement a load or unload transaction of the terminal apparatus by interacting with the terminal apparatus.

In practical applications, the system for payment and collection may further include a first card read/write device which is adapted to connect with the card issuing sub-system to implement direct interaction between the smart memory card in the terminal apparatus and the card issuing sub-system. In this way, the user can carry the smart memory card to the card issuing sub-system and personalize the smart memory card of the terminal apparatus directly at the card issuing sub-system by utilizing the first card read/write device. Of course, this can also be implemented via a remote network.

The system for payment and collection may further include a second card read/write device which is adapted to connect with the load/unload transaction sub-system to implement direct interaction between the smart memory card in the terminal apparatus and the load/unload transaction sub-system. In this way, the load/unload transaction sub-system can implement the load/unload transaction process for the smart memory card by directly using the second card read/write device.

Herein, the first card read/write device and the second card read/write device can be an existing device capable of reading and writing a memory card and will not be described in details herein.

The system for payment and collection proposed in the present invention can implement load/unload transactions. Since in practical applications the load transaction and the unload transaction have a similar process, the method for load transaction is illustrated hereinafter as an example.

The present invention provides a method for a load transaction implemented based on the above system for payment and collection. The method includes the following steps.

Step a, establishing a secure data transmission channel between an intelligent terminal and a bank back-end system, after a user loges on the bank back-end system by utilizing the intelligent terminal and the bank back-end system authenticates an identity of the user.

This step is different from that of the existing load process in that: in the existing load process, the user is required to carry a bank card and make a face-to-face operation at a bank, and no secure data channel is required to be established between the user and the bank; while in the embodiment, since the user performs the load activity in a remote communication mode, in which the security of the interaction between the user and the bank needs to be ensured, the secure data transmission channel is established to ensure security in data communication between the intelligent terminal and the bank back-end system. The establishment of the secure data transmission channel can be implemented by utilizing a Secure Socket Layer (SSL) or other existing techniques and will not be described in details herein.

Step b, the bank back-end system triggering the load/unload transaction sub-system to perform a POS-like terminal authentication on the intelligent terminal, and returning an authentication result to the intelligent terminal.

Herein, the POS-like terminal refers to a terminal having the function of the existing POS terminal.

Preferably, the bank back-end system triggering the load/unload transaction sub-system to perform the POS-like terminal authentication on the intelligent terminal in Step b includes:

the back-end bank sub-system triggering the load/unload transaction sub-system to begin authenticating the intelligent terminal as a POS-like terminal;

the load/unload transaction sub-system requesting to authenticate the POS-like terminal identity of the intelligent terminal and sending signature information of the load/unload transaction sub-system to the intelligent terminal;

according to the signature information received from the load/unload transaction sub-system, the intelligent terminal verifying the identity of the load/unload transaction sub-system, performing corresponding identity authentication interaction in accordance with a POS terminal authentication specification, and sending information related to the POS-like terminal identity to the load/unload transaction sub-system; and

the load/unload transaction sub-system processing the received information related to the POS-like terminal identity to perform identity authentication.

The specific method of identity authentication can be implemented in any way by those skilled in the art and will not be described in details herein.

In practical applications, after finishing the authentication and before returning the authentication result to the intelligent terminal, the method may further include:

if the authentication is successful, the load/unload transaction sub-system notifying the bank back-end system to allow the intelligent terminal access the bank back-end system with the POS-like terminal identity; otherwise, returning access-refused information to the bank back-end system.

Step c, after receiving information indicating a successful authentication, the intelligent terminal automatically entering into a load interface in the user interface, acquiring load information of the user from the load interface, and proceeding to step d; otherwise, prompting an error to the user.

Step d, the intelligent terminal sending a load service request containing the load information of the user, to the bank back-end system.

Step e, according to the load service request, the bank back-end system performing corresponding load operation on the smart memory card via the intelligent terminal.

Herein, the load operation is well known to those skilled in the art and will not be described in details herein.

The Step e includes:

the bank back-end system processing the load service request, checking fund in the user account, and if the fund in the user account is sufficient, notifying the intelligent terminal to prepare for the load operation, otherwise returning back an alert of insufficient balance;

the intelligent terminal correspondingly processing the received information, and notifying the smart memory card to switch into a payment mode;

the user inputting load information to the intelligent terminal, the intelligent terminal signing the load information and sending the signed load information to the bank back-end system;

the bank back-end system verifying the signature of the load information, and processing the load information;

the bank back-end system temporarily deducting fund for the load from the user account and returning deduction information to the intelligent terminal;

the intelligent terminal requesting the smart memory card to write the fund for the load;

the smart memory card processing the request for writing the fund for the load, and detecting a record of original fund in the smart memory card;

the smart memory card summing up the original fund and the fund for the load and writing a new fund for the load;

the smart memory card notifying the intelligent terminal of a successful load, and the intelligent terminal notifying the bank back-end system of information about the successful load;

the bank back-end system processing the information about the successful load and confirming the deduction of the user account; and

the user confirming the load and sending a notification of an end of the load to the bank back-end system.

To further improve the security of transaction, after the step e, the method further includes:

the intelligent terminal notifying the smart memory card to exit from the payment mode; and

the smart memory card performing operation to exit the payment mode, and notifying the intelligent terminal of the result of the exit.

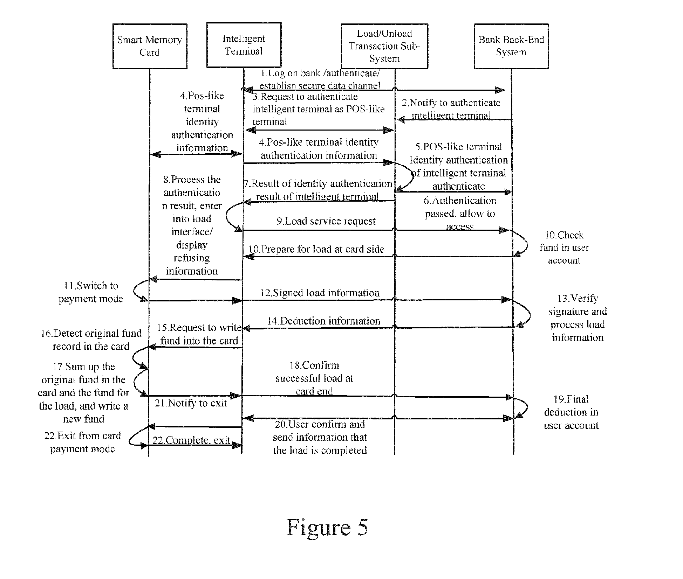

A first embodiment of the method for load transaction according to the present invention is described hereinafter for further illustrating the above method for load transaction. Figure 5 is a flowchart of the first embodiment of the method for load transaction. As shown in Figure 5, the method includes steps of:

Step1, a user using an intelligent terminal to log on a bank back-end system, the bank back-end system authenticating the identity of the user using a digital certificate and establishing a secure data transmission channel;

Step2, notifying a load/unload transaction sub-system to start authenticating the intelligent terminal as a POS-like terminal;

Step 3, the load/unload transaction sub-system requesting to authenticate the POS-like terminal identity of the intelligent terminal, and sending signature information of the load/unload transaction sub-system to the intelligent terminal;

Step 4, the intelligent terminal receiving information send from the load/unload transaction sub-system, verifying the signature so as to authenticate the identity of the load/unload transaction sub-system, and performing corresponding identity authentication interaction in accordance with a POTS terminal authentication specification, and sending the result to the load/unload transaction sub-system;

Step 5, the load/unload transaction sub-system processing the received information related to the POS-like terminal identity to perform identity authentication;

Step 6, if the authentication in the load/unload transaction sub-system is passed, notifying the bank back-end system to allow the intelligent terminal access the bank back-end system with the POS-like terminal identity; otherwise, returning access-refused information to the bank back-end system;

Step 7, the load/unload transaction sub-system returning the authentication result of the POS-like terminal identity to the intelligent terminal;

Step 8, returning the authentication result of the POS-like terminal identity, if the authentication result is allowing to access the bank back-end system, entering into a load interface; and if the authentication result is access-refused information, prompting an error;

Step 9, the user inputting load information on the load interface, and sending a load service request to the bank back-end system;

Step 10, the bank back-end system processing the load service request information, checking the fund in the user account, and if the fund in the user account is sufficient, notifying the intelligent terminal to prepare for load operation; otherwise, returning an alert of insufficient balance;

Sep11, the intelligent terminal processing corresponding information, and notifying the smart memory card to switch into a payment application mode;

Step 12, the user inputting specific load information to the intelligent terminal, and the intelligent terminal signing the load information and sending the signed load information to the bank back-end system;

Step 13, the bank back-end system verifying the signature and processing the load information;

Step 14, the bank back-end system temporarily deducting the fund for the load from the user account, and returning deduction information to the intelligent terminal;

Step 15, the intelligent terminal requesting the smart memory card to write the fund for the load;

Step 16, the smart memory card processing the request for writing the fund for the load, and detecting a record of original fund in the card;

Step 17, the smart memory card summing up the original fund and the fund for the load, and writing a new fund (number) for the load;

Step 18, the smart memory card notifying the intelligent terminal of a successful load, and the intelligent terminal notifying the bank back-end system of information about the successful load;

Step 19, the bank back-end system processing the information about the successful load from the intelligent terminal, and confirming the deduction of the user account;

Step 20, the user confirming the load, and sending a notification of an end of the load to the bank back-end system;

Step 21, the intelligent terminal notifying the smart memory card to exit from the card payment mode; and

Step 22, the smart memory card performing operation to exit the payment mode, and notifying the result of the exit to the intelligent terminal, therefore the load is completed.

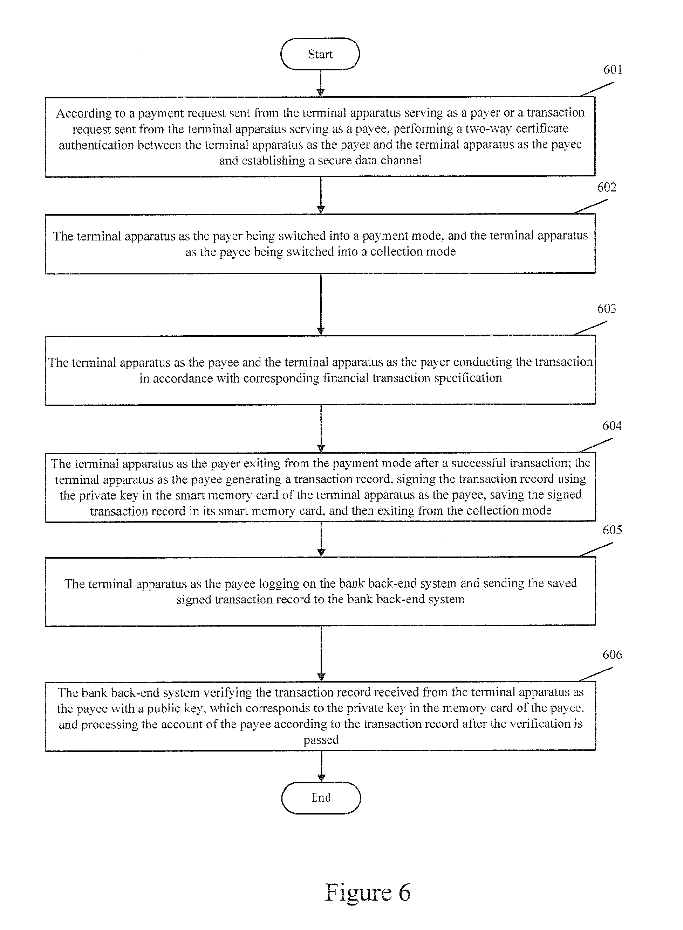

Figure 6 is a flowchart of a first embodiment of the method for purchase transaction implemented using the above system for payment and collection. As shown in Figure 6, the method includes:

Step 601, according to a payment request sent from a terminal apparatus as a payer or a transaction request sent from a terminal apparatus as a payee, performing a two-way certificate authentication between the terminal apparatus as the payer and the terminal apparatus as the payee and establishing a secure data channel.

Herein, the specific implementation of the two-way certificate authentication and the secure data channel varies from different transaction scene selected before the transaction. The transaction scene can be a RF transaction scene, (i.e. using an RF interface in the smart memory card for communication), a near-field communication transaction scene (using a near-field communication unit in the intelligent terminal for communication) or a remote communication transaction scene (using a remote communication unit in the intelligent terminal for communication).

The message for the either request contains information such as the fund involved in the transaction. After the party that receives the either request confirms the transaction, the terminal as the payer is switched to a payment application mode, and the terminal as the payee is switched to a collection operating mode.

In this step, the two-way certificate authentication is used to confirm that the payee has the authority for collection and the payer is a legal apparatus from the bank. The security of the purchase transaction can be ensured by the two-way certificate authentication between the payer and the payee.

Step 602, the terminal apparatus as the payer being switched into a payment mode, and the terminal apparatus as the payee being switched into a collection mode.

Step 603, the terminal apparatus as the payee and the terminal apparatus as the payer conducting the transaction in accordance with corresponding financial transaction specification.

Step 604, the terminal apparatus as the payer exiting from the payment mode after a successful transaction; the terminal apparatus as the payee generating a transaction record, signing the transaction record using a private key in the smart memory card of the terminal apparatus as the payee, saving the signed transaction record in its smart memory card, and then exiting from the collection mode.

In this step, by signing the transaction record with the private key in the smart memory card of the terminal apparatus, the transaction information is avoided to be tampered by the payee, and therefore the accountability of the transaction is enhanced.

Step 605, the terminal apparatus as the payee logging on the bank back-end system and sending the saved signed transaction record to the bank back-end system.

In practical applications, the payee can timely log on the bank back-end system as needed, so as to upload the transaction record generated previously to the bank back-end system.

Step 606, the bank back-end system verifying the transaction record received from the terminal apparatus as the payee with a public key, which corresponds to the private key in the smart memory card of the payee, and processing the account of the payee according to the transaction record after the verification is passed.

In this step, the bank back-end system verifies the transaction record received from the terminal apparatus as the payee with a public key, which corresponds to the private key in the smart memory card of the payee, so as to ensure the validity and integrity of the transaction record; after the transaction record uploaded by the payee has passed the verification, the bank back-end system correspondingly processes the account of the payee according to the transaction record and corresponding transaction specification, and the purchase transaction is completed.

By using the above technical solutions, the device of the present invention has the following features: capable of providing on-line payment and collection function and non-contact payment and collection function; small, lightweight and easy to be carried, capable of being plugged into various intelligent terminals (including but not limited to a mobile phone, a PDA, a PC, intelligent home appliances, etc.); capable of being used with any intelligent terminal having card slot for universal data interface without requiring a customized intelligent terminal hardware, since the data transmission uses the universal interface (including but not limited to a SD interface, a USB interface, a CF interface, a RF interface, etc.), and thus being highly adaptive and highly flexible; having a significantly reduced cost and being applicable to the large-scale deployed payment/collection application based on intelligent terminals, so as to support the innovation in the finance industry and telecommunication industry; capable of implementing on-line or non-contact payment and collection function conveniently by only carrying an intelligent terminal plugged with a smart memory card; capable of supporting various application modes of electronic financial services, including but not limited to an electronic purse, an electronic bankbook, debit application, credit application, credit card application, etc.; capable of being applicable in various transaction scenes, including but not limited to mobile intelligent terminal-to-mobile intelligent terminal payment transaction, mobile intelligent terminal-to-fixed intelligent terminal payment transaction, and the present device-to-intelligent terminal payment transaction.

The transaction system of the present invention has advantages of being compatible with the existing bank specifications, having a high security, and easy to be integrated into the existing bank back-end system without large amount of modification, therefore it facilitates fast deployment, large scale application and popularization.

The transaction system according to the present invention can implement remote load, which brings convenience to users and reduces operation cost.

In a conclusion, the above embodiments are only preferable embodiments of the present invention, and are not intended to limit the scope of protection of the present invention. Any modification, equivalent alternative, improvement within the spirit and principle of the present invention shall fall in the scope of protection of the present invention.

## Claims

1. A device integrated with payment function and collection function, comprising a smart memory card and an intelligent terminal, wherein the intelligent terminal is connected with the smart memory card via a universal storage interface,
the intelligent terminal is adapted to generate a secure transaction management instruction according to an instruction from a user, send the secure transaction management instruction to the smart memory card, and notify the user of an execution result of the secure transaction management instruction fed back from the smart memory card; to interact with a bank side system via a remote communication network; to perform information interaction with the user via a user interface; to interact with another device integrated with payment function and collection function within a predetermined range in a near-field communication mode; to process a transaction instruction from the user, the another device or the bank side system, generate and send a corresponding secure transaction application instruction to the smart memory card; and to notify the user of an execution result of the secure transaction application instruction fed back from the smart memory card, or send the execution result of the secure transaction application instruction to the bank side system or the another device; and
the smart memory card is adapted to execute the secure transaction management instruction and the secure transaction application instruction.

2. The device integrated with payment function and collection function according to claim 1, wherein the secure transaction application instruction comprises an electronic bankbook operating instruction or a Point of Sale (POS) security module processing instruction.

3. The device integrated with payment function and collection function according to claim 1, wherein the secure transaction application instruction comprises an electronic bankbook operating instruction, a Point of Sale security module processing instruction, an electronic purse operating instruction or a purchase secure access module processing instruction.

4. The device integrated with payment function and collection function according to claim 1, wherein the smart memory card comprises a core control unit and the universal storage interface, the universal storage interface is connected with the core control unit,
the core control unit is adapted to execute the secure transaction management instruction from the universal storage interface; to execute the secure transaction application instruction received from the universal storage interface; and to send the execution results of the instructions to the intelligent terminal via the universal storage interface; and
the universal storage interface is adapted to implement information interaction between the intelligent terminal and the core control unit.

5. The device according to claim 4, wherein the core control unit comprises a storage control unit and a secure transaction application unit,
the storage control unit is adapted to receive the secure transaction management instruction from the universal storage interface, and send the secure transaction management instruction to the secure transaction application unit for execution; to return an execution result fed back from the secure transaction application unit to the universal storage interface; and to send the secure transaction application instruction received from the universal storage interface to the secure transaction application unit, and send an execution result of the secure transaction application instruction fed back from the secure transaction application unit to the intelligent terminal via the universal storage interface; and
the secure transaction application unit is adapted to execute the secure transaction application instruction and the secure transaction management instruction received from the storage control unit, and feed back the execution results to the storage control unit.

6. The device according to any one of claims 1-5, wherein the intelligent terminal comprises:
a card management unit, a card read/write unit, an input/output unit, a transaction processing unit, a near-field communication unit and a remote communication unit, wherein:
the card read/write unit is adapted to implement information interaction between the smart memory card and the card management unit; and to implement information interaction between the smart memory card and the transaction processing unit;
the card management unit is adapted to generate the secure transaction management instruction according to the instruction of the user; to send the secure transaction management instruction to the smart memory card via the card read/write unit; and to notify the user of the execution result of the secure transaction management instruction fed back from the smart memory card via the input/output unit;
the input/output unit is adapted to implement information interaction between the transaction processing unit and the user; and to implement information interaction between the card management unit and the user;
the remote communication unit is adapted to implement information interaction between the transaction processing unit and the bank side system;
the near-field communication unit is adapted to implement information interaction between the transaction processing unit and the another device within the predetermined range; and
the transaction processing unit is adapted to process the transaction instruction received from the user, the another device integrated with payment function and collection function within the predetermined range or the bank side system, generate and send the corresponding secure transaction application instruction to the smart memory card via the card read/write unit; to notify the user of the execution result of the secure transaction application instruction fed back from the smart memory card via the input/output unit, or send the execution result of the secure transaction application instruction to the bank side system via the remote communication unit, or feed back the execution result of the secure transaction application instruction to the another device via the near-field communication unit.

7. The device according to claim 6, wherein the near-field communication unit is further adapted to implement information interaction between the transaction processing unit and the another device within the predetermined range by utilizing Bluetooth or infrared communication technique.

8. A device integrated with payment function and collection function, comprising a smart memory card and an intelligent terminal, wherein the intelligent terminal is connected with the smart memory card via a universal storage interface,
the intelligent terminal is adapted to send a secure transaction management instruction to the smart memory card according to an instruction of a user, and notify the user of an execution result of the secure transaction management instruction fed back from the smart memory card; to interact with a bank side system via a remote communication network; to perform information interaction with the user via a user interface; to process a transaction instruction from the user or the bank side system, generate and send a corresponding secure transaction application instruction to the smart memory card; and to notify the user of an execution result of the secure transaction application instruction fed back from the smart memory card, or send the execution result of the secure transaction application instruction to the bank side system; and
the smart memory card is adapted to execute the secure transaction management instruction received from the intelligent terminal; to interact with another device integrated with payment function and collection function within a predetermined range in a radio frequency communication mode; to execute the secure transaction application instruction received from the another device or the intelligent terminal, and send the execution result of the secure transaction application instruction to the intelligent terminal or the another device.

9. The device integrated with payment function and collection function according to claim 8, wherein the secure transaction application instruction comprises an electronic bankbook operating instruction or a Point of Sale security module processing instruction.

10. The device integrated with payment function and collection function according to claim 8, wherein the secure transaction application instruction comprises an electronic bankbook operating instruction, a Point of Sale security module processing instruction, an electronic purse operating instruction or a purchase secure access module processing instruction.

11. The device according to claim 8, wherein the smart memory card comprises a radio frequency interface, a core control unit and a universal storage interface, the radio frequency interface and the universal storage interface are connected with the core control unit,
the core control unit is adapted to execute the secure transaction management instruction received from the universal storage interface; to execute the secure transaction application instruction received from the radio frequency interface or the universal storage interface, and send the execution result of the secure transaction application instruction to the intelligent terminal via the universal storage interface, or send the execution result the secure transaction application instruction to the another device via the radio frequency interface;
the universal storage interface is adapted to implement information interaction between the intelligent terminal and the core control unit; and
the radio frequency interface is adapted to implement information interaction between the core control unit and the another device within the predetermined range.

12. The device according to claim 11, wherein the core control unit comprises a storage control unit, a radio frequency control unit and a secure transaction application unit,
the storage control unit is adapted to send the secure transaction management instruction received from the universal storage interface to the secure transaction application unit for execution; to send the secure transaction application instruction received from the universal storage interface or the radio frequency control unit to the secure transaction application unit for execution; to send an execution result fed back from the secure transaction application unit to the radio frequency control unit or send the execution result fed back from the secure transaction application unit to the intelligent terminal via the universal storage interface;
the radio frequency control unit is adapted to implement information interaction between the storage control unit and the another device via the radio frequency interface in a radio frequency communication mode; and
the secure transaction application unit is adapted to execute the secure transaction application instruction and the secure transaction management instruction received from the storage control unit, and feed back execution results of the secure transaction application instruction and the secure transaction management instruction to the storage control unit.

13. The device according to claim 11, wherein the core control unit comprises a storage control unit, a memory unit, a radio frequency control unit and a secure transaction application unit;
the storage control unit is adapted to send the secure transaction management instruction received from the universal storage interface to the secure transaction application unit for execution; and to send the execution result fed back from the secure transaction application unit to the intelligent terminal via the universal storage interface;
the radio frequency control unit is adapted to implement information interaction between the secure transaction application unit and the another device via the radio frequency interface in a radio frequency communication mode; and
the secure transaction application unit is adapted to execute the secure transaction application instruction received from the storage control unit or the radio frequency control unit; to execute the secure transaction management instruction received from the storage control unit; and to send execution results of the secure transaction management instruction and the secure transaction application instruction to the storage control unit or the radio frequency control unit.

14. The device according to any one of claims 9-13, wherein the intelligent terminal comprises:
a card management unit, a card read/write unit, an input/output unit, a transaction processing unit and a remote communication unit,
the card read/write unit is adapted to implement information interaction between the smart memory card and the card management unit; and to implement information interaction between the smart memory card and the transaction processing unit;
the card management unit is adapted to generate the secure transaction management instruction according to the instruction of the user; to send the secure transaction management instruction to the smart memory card via the card read/write unit; and to notify the user of the execution result of the secure transaction management instruction fed back from the smart memory card via the input/output unit;
the input/output unit is adapted to implement information interaction between the transaction processing unit and the user; and to implement information interaction between the card management unit and the user;
the remote communication unit is adapted to implement information interaction between the transaction processing unit and the bank side system; and
the transaction processing unit is adapted to process the transaction instruction received from the user or the bank side system, generate and send the corresponding secure transaction application instruction to the smart memory card via the card read/write unit; to notify the user of the execution result of the secure transaction application instruction fed back from the smart memory card via the input/output unit, or send the execution result of the secure transaction application instruction to the bank side system via the remote communication unit.

15. The device according to claim 14, wherein the intelligent terminal further comprises a near-field communication unit adapted to implement information interaction between the transaction processing unit and the another device within the predetermined range; and
the transaction processing unit is further adapted to process a transaction instruction received from the another device, generate and send a corresponding secure transaction application instruction to the smart memory card via the card read/write unit; to feed back an execution result of the secure transaction application instruction fed back from the smart memory card to the another device via the near-field communication unit.

16. The device according to claim 15, wherein the near-field communication unit is further adapted to implement information interaction between the transaction processing unit and the another device within the predetermined range by utilizing Bluetooth or infrared communication technique.

17. A system for payment and collection, comprising a terminal apparatus, a load/unload transaction sub-system, a card issuing sub-system and a bank back-end system, wherein the terminal apparatus is the device integrated with payment function and collection function according to any one of claims 1-16, the terminal apparatus is arranged at the user side, and the load/unload transaction sub-system, the card issuing sub-system and the bank back-end system are arranged at the bank side,
the terminal apparatus is adapted to implement a payment of an electronic transaction as a payer by interacting with the bank back-end system and another terminal apparatus which serves as a payee; to implement a collection of the electronic transaction as a payee by interacting with the bank back-end system and another terminal apparatus which serves as a payer; and to implement a load or unload transaction by interacting with the load/unload transaction sub-system;
the card issuing sub-system is adapted to personalize the smart memory card of the terminal apparatus;
the bank back-end system is adapted to implement a purchase transaction by interacting respectively with the terminal apparatus serving as the payer and the terminal apparatus serving as the payee; and
the load/unload transaction sub-system is adapted to implement the load or unload transaction of the terminal apparatus by interacting with the terminal apparatus.

18. The system for payment and collection according to claim 17, wherein the system for payment and collection further comprises a first card read/write device and/or a second card read/write device;
the first card read/write device is adapted to be connected with the card issuing sub-system, and implement direct interaction between the smart memory card in the terminal apparatus and the card issuing sub-system; and
the second card read/write device is adapted to be connected with the load/unload transaction sub-system, and implement direct interaction between the smart memory card in the terminal apparatus and the load/unload transaction sub-system.

19. A method for a load transaction implemented with the system for payment and collection according to claim 17, the method comprising:
a) establishing a secure data transmission channel between an intelligent terminal and a bank back-end system, after a user loges on the bank back-end system by utilizing the intelligent terminal and the bank back-end system authenticates an identity of the user;
b) triggering the load/unload transaction sub-system to perform a POS-like terminal authentication on the intelligent terminal and returning an authentication result to the intelligent terminal, by the bank back-end system;
c) if the intelligent terminal receives information indicating a successful authentication, automatically entering into a load interface, acquiring load information of the user by using the load interface, and proceeding to step d); if the intelligent terminal does not receive information indicating a successful authentication, prompting an error to the user;
d) sending, by the intelligent terminal, a load service request containing the load information of the user, to the bank back-end system; and
e) performing corresponding load operation on the smart memory card via the intelligent terminal, by the bank back-end system, according to the load service request.

20. The method for the load transaction according to claim 19, wherein triggering the load/unload transaction sub-system to perform the POS-like terminal authentication on the intelligent terminal by the bank back-end system in step b) comprises:
triggering the load/unload transaction sub-system to begin authenticating the intelligent terminal as a POS-like terminal, by the back-end bank sub-system;
requesting to the intelligent terminal for authenticating a POS-like terminal identity of the intelligent terminal and sending signature information of the load/unload transaction sub-system to the intelligent terminal, by the load/unload transaction sub-system;
verifying the identity of the load/unload transaction sub-system according to the signature information received from the load/unload transaction sub-system, performing corresponding identity authentication interaction in accordance with a POS terminal authentication specification, and sending information related to the POS-like terminal identity to the load/unload transaction sub-system, by the intelligent terminal; and
processing the received information related to the POS-like terminal identity and performing identity authentication, by the load/unload transaction sub-system.

21. The method for the load transaction according to claim 19, wherein step b) further comprises the following operation after finishing the authentication:
if the authentication is successful, notifying, by the load/unload transaction sub-system, the bank back-end system to allow the intelligent terminal to access the bank back-end system with the POS-like terminal identity; if the authentication is not successful, returning, by the load/unload transaction sub-system, access-refused information to the bank back-end system.

22. The method for the load transaction according to claim 19, wherein step e) comprises:
processing the load service request and checking fund in the user account, by the bank back-end system, if the fund in the user account is sufficient, notifying the intelligent terminal to begin load operation, if the fund in the user account is not sufficient, returning back an alert of insufficient balance;
correspondingly processing the received information and notifying the smart memory card to switch to a payment mode, by the intelligent terminal;
inputting load information to the intelligent terminal by the user, signing the load information and sending the signed load information to the bank back-end system by the intelligent terminal;
verifying the signature of the load information and processing the load information, by the bank back-end system;
temporarily deducting fund for the load from the user account and returning deduction information to the intelligent terminal, by the bank back-end system;
requesting to the smart memory card for writing the fund for the load, by the intelligent terminal;
processing the request for writing the fund for the load and detecting a record of original fund in the smart memory card, by the smart memory card;
summing up the original fund and the fund for the load and writing a new fund for the load, by the smart memory card;
notifying the intelligent terminal of a successful load, by the smart memory card, and notifying the bank back-end system of information about the successful load, by the intelligent terminal;
processing the information about the successful load and confirming the deduction of the user account, by the bank back-end system; and
confirming the load by the user and sending a notification of an end of the load to the bank back-end system.

23. The method for the load transaction according to claim 19, wherein the method further comprises the following operations after step e):
notifying the smart memory card to exit from the payment mode, by the intelligent terminal; and
performing operation to exit the payment mode and notifying the intelligent terminal of a result of the exit, by the smart memory card.

24. A method for a purchase transaction implemented with the system according to claim 17, the method comprising:
according to a payment request sent from a terminal apparatus as a payer or a transaction request sent from a terminal apparatus as a payee, performing a two-way certificate authentication between the terminal apparatus as the payer and the terminal apparatus as the payee and establishing a secure data channel;
switching the terminal apparatus as the payer to a payment mode, and switching the terminal apparatus as the payee to a collection mode;
conducting the transaction in accordance with corresponding financial transaction specification by the terminal apparatus as the payee and the terminal apparatus as the payer;
exiting from the payment mode after a successful transaction, by the terminal apparatus as the payer; generating a transaction record, signing the transaction record by using a private key in a smart memory card of the terminal apparatus as the payee, saving the signed transaction record in the smart memory card, and then exiting from the collection mode, by the terminal apparatus as the payee;
logging on the bank back-end system and sending the saved signed transaction record to the bank back-end system, by the terminal apparatus as the payee; and
verifying the transaction record received from the terminal apparatus as the payee with a public key, which corresponds to the private key in the smart memory card of the payee, and processing an account of the payee according to the transaction record after the verification is passed, by the bank back-end system.
